# EUROPEAN PATENT SPECIFICATION

(11) **EP 1 180 893 B1**
(45) Date of publication and mention of the grant of the patent: **11.10.2006**
(21) Application number: 00307020.8
(22) Date of filing: 16.08.2000
(51) Int. Cl.: H04M 11/06

(54) **Modem device**
Modem Vorrichtung
Dispositif de Modem

(43) Date of publication of application: 20.02.2002
(73) Proprietor: Zyxel Communications Corporation, Hsin-Chu, Taiwan (TW)
(72) Inventor: Gau, Ti-YIng Troy, Taipei (TW); Su, Yuan, Chi, N. District, Hsinchu (TW)
(74) Representative: Dearing-Lambert, Peter Richard

(56) References cited:
- WO-A-99/65219
- US-A- 5 867 660
- L. MAMAKOS, K. LIDL, J. EVARTS, D. CARREL, D. SIMONE, R. WHEELER: "A Method for Transmitting PPP over Ethernet (PPPoE)" IETF RFC 2516, 1 February 1999 (1999-02-01), XP002159712

## Description

### BACKGROUND OF THE INVENTION

### Field of the Invention

The present invention generally relates to a modem device, and more particularly to a modem device that provides PPPoE(Point-to-Point Protocol over Ethernet) connections between the modem device and a plurality of PPPoE ACs(PPPoE Access Concentrator).

### Description of the Related Art

In the OSI Reference Model, a seven-layer architecture is defined to allow equipment by different vendors to interoperate and to make applications independent of the hardware on which they run.

A modem device is a physical layer (layer 1) device that converts and relays data between two ports. A modem typically also has call control, e.g., call setup, call teardown and flow control capability. As an example, an analog modem generally has one serial port for connection to a host and one line port for interfacing to the PSTN(Public Switch Telephone Network) . The analog modem handles the dialing and the hanging up of telephone calls as well as data conversion and relaying between the serial port and the line port.

The Point-to-Point Protocol (PPP) provides a standard method for transporting multi-protocol datagrams over point-to-point links. PPP is the preferred link layer (layer 2) protocol for connecting networks over WAN links. In particular, dial-up networking over PPP using serial port and modem is implemented on virtually all computing platforms.

With the advent of broadband technology, e.g., DSL and data over cable, a large number of broadband modems are equipped with an Ethernet port, as opposed to a serial port, to support the higher throughput. However, since Ethernet is not a point-to-point medium, there must be a method for transporting the PPP frames directly over Ethernet from the host running PPP to the modem. RFC 2516, "A Method for Transmitting PPP Over Ethernet (PPPoE)", provides such a method. However, it requires both the PPP protocol stack and the PPPoE protocol stack to reside on the same machine when using a conventional bridging modem.

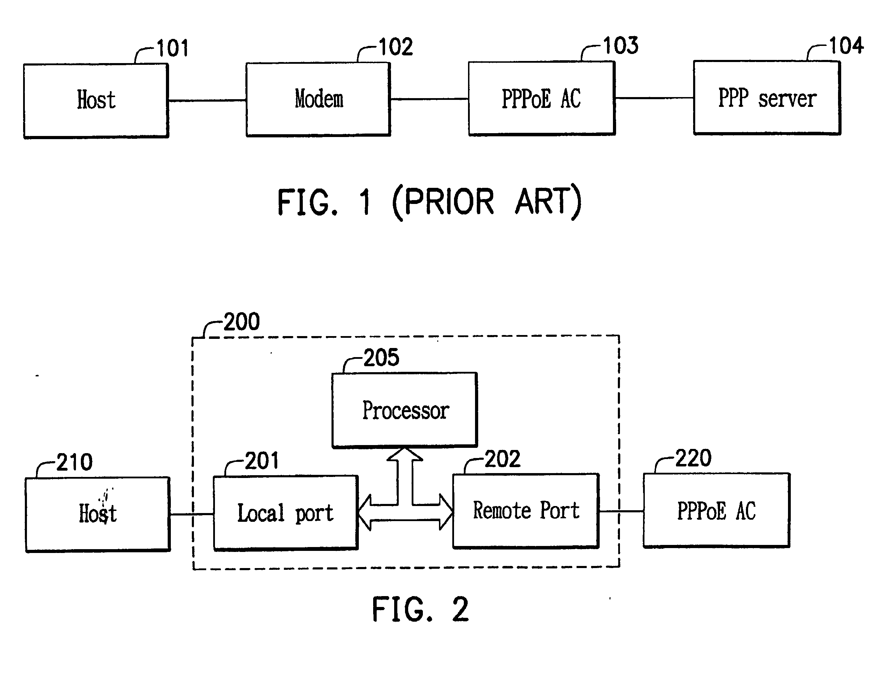

FIG.1 is a block diagram illustrating an arrangement wherein a conventional bridging modem 102 is used in conjunction with PPPoE running on a host **101.** The PPPoE connection is between host **101** and PPPoE AC **103;** and the PPP connection is between host **101** and PPP server **104.** Both the PPP and the PPPoE connections must terminate at host **101,** since bridging modem **102** performs simple relaying of Ethernet frames only.

However, there are disadvantages when both the PPP and the PPPoE connections terminate at host **101.** This is because both PPPoE AC **103** and PPP server **104** must provide host **101** with a driver for connections to be possible. If the OS (operating system) of the host **101** changes, the connections may be disabled. This requires the burdensome task of updating the driver. Attempts have been made to overcome this: WO 99/65219 discloses an "internet-ready modem" where portions of the network protocol stack providing PPP connectivity are implemented within the modem as opposed to at the host. However, such a modem does not provide PPPoE service.

### SUMMARY OF THE INVENTION

It is a general object of the present invention to provide an improved modem in which the above-mentioned disadvantages are eliminated.

A more specific object of the present invention is to provide PPPoE service in a modem. The above-mentioned objects of the present invention are achieved by a modem having a processor that implements the PPPoE protocol stack. With such a PPPoE modem, the requirement that the PPP protocol stack and the PPPoE protocol stack must reside on the same machine is removed.

### BRIEF DESCRIPTION OF THE DRAWINGS

The present invention is illustrated by way of example and not limited to the figures of the accompanying drawings, in which like references indicate similar elements, and in which:
FIG. 1 shows a modem that operates according to the prior art;
FIG. 2 shows the components of the present invention;
FIG. 3 shows a modem of one embodiment wherein the local connection uses PPTP; and
FIG. 4 shows the message exchange for the arrangement in FIG. 3

FIG. 2 is a block diagram illustrating the major functional components of the present invention. Modem **200** includes local port **201** for interfacing to the local network, remote port **202** for interfacing to the access network and processor **205** that implements the PPPoE protocol stack for PPPoE call control and framing, and controls the operations of other components.

Before data can be relayed between local port **201** and remote port **202,** a call must be set up between modem **200** and PPPoE AC **220.** Processor **205** responds to a call setup message received on local port **201** from host **210** and starts the PPPoE call setup procedure on remote port **202**. When the call is established, processor **205** begins relaying the PPP frames between local port **201** and remote port **202**.

When a PPP frame is received on local port **201**, it is decapsulated according to the encapsulation method on local port **201**. After decapsulation, processor **205** encapsulates the frame in PPPoE format and transmits it onto remote port **202**. Moreover, when a frame is received on remote port **202**, it is processed in a similar fashion, only in the reversed direction.

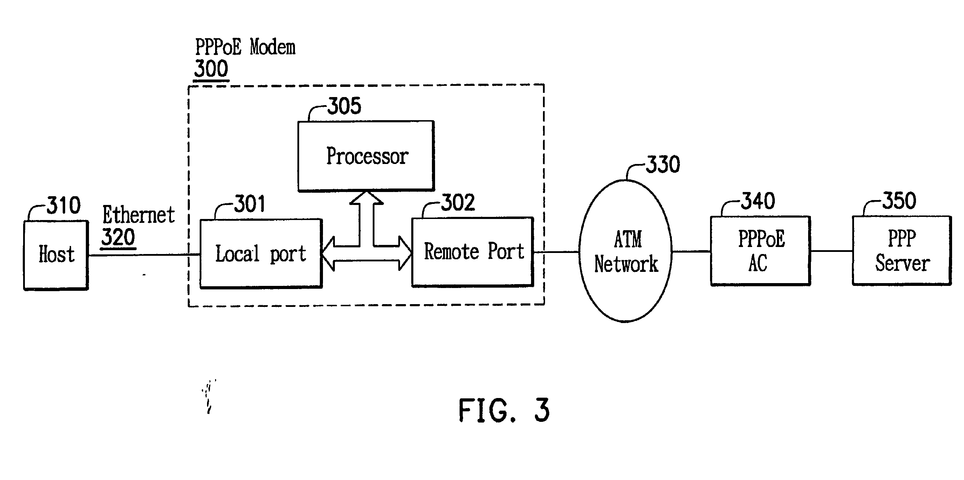

FIG. 3 shows an arrangement wherein a host on the local Ethernet network utilizes a PPPoE modem for remote access in PPPoE over an ATM network 330. More specifically, FIG. 3 shows PPPoE modem **300,** host **310,** PPPoE AC **340** and PPP access server **350.** Local port **301** in modem **300** is coupled to the local Ethernet **320**, transmitting and receiving data to and from host **310** over PPTP (Point-to-Point Tunneling Protocol). Remote port **302** is coupled to ATM network **330** and carries the traffic in PPPoE over AAL5 (ATM Adaptation Layer 5). Processor **305** implements the PPPoE protocol stack for PPPoE call control and framing, and controls the operations of Local port 301, Remote port 302, and other components.

Note that even though FIG. 3 shows only one host, one PPPoE AC and one PPP access server, it is possible to have a plurality of hosts on the local Ethernet, each instantiating a separate PPTP control connection to the PPPoE modem. It is also possible for a single host to request multiple calls within the PPTP control connection to create PPP sessions to different PPP access servers.

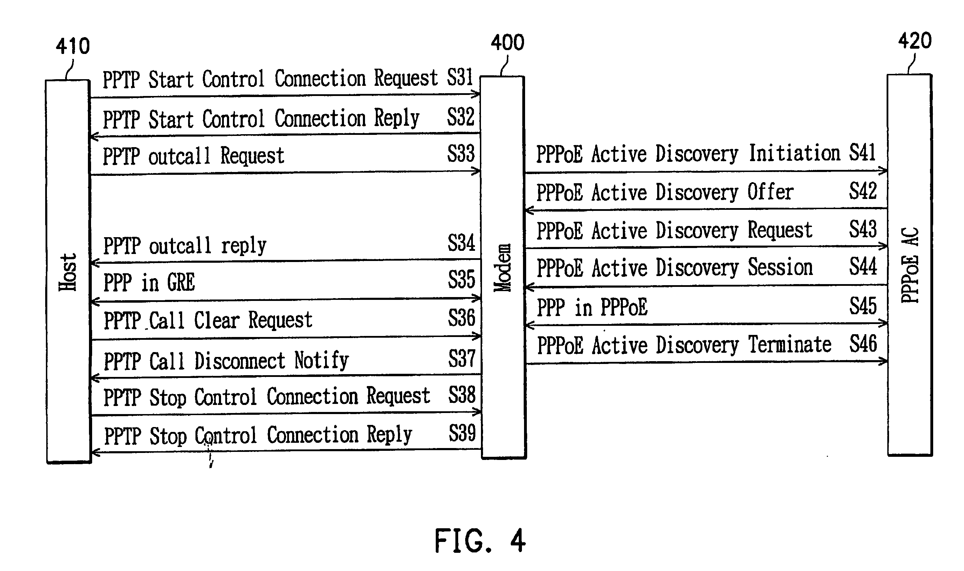

FIG. 4 illustrates the message exchange between modem **400** and host **410** over PPTP and between modem **400** and PPPoE AC **420** over PPPoE. After a TCP connection between modem **400** and host **410** is first instantiated, PPTP message exchange starts. Host **410** first sends a PPTP Start-Control-Connection-Request **S31** to modem **400** to initiate a PPTP control connection. Modem **400** responds by sending a PPTP Start-Control-Connection-Reply **S32** to host **410**, at which point in time a PPTP control connection is established. Host **410** then sends a PPTP Outcall-Request **S33** to request modem 400 to place an outgoing call Modem 400 initiates an outgoing call by sending a PPPoE Active Discovery Initiation **S41** in Ethernet broadcast address on the ATM network to which modem **400** is coupled. PPPoE AC **420** sends a PPPoE Active Discovery Offer **S42** to modem **400** to indicate the availability of the service, at which time modem 400 learns the Ethernet address of PPPoE AC **420** that offers the service. Modem **400** then sends a PPPoE Active Discovery Request **S43** to PPPoE AC **420.** PPPoE AC **420** then sends a PPPoE Active Discovery Session **S44** to modem **400** to complete the PPPoE call setup procedure. Upon receiving PPPoE Active Discovery Session **S44,** Modem **400** sends a PPTP Outcall Reply **S34** to host **410** to indicate that the call is successful. At this point modem **400** is in data state. After receiving a successful PPTP Outcall Reply **S34** from modem **400**, host **410** starts transmitting and receiving PPP frames in GRE (General Routing Encapsulation) **S35** according to PPTP specification. Modem **400** receives PPP frames in GRE **S35** from host **410** and relays them to PPPoE AC **420** in PPPoE encapsulation **S45.** Similarly, Modem **400** receives PPP frames from PPPoE AC **420** in PPPoE encapsulation **S45** and relays them to host **410** in GRE S35.
When host **410** wishes to terminate the call, it sends a PPTP Call Clear Request **S36** to modem **400.** Modem **400** first sends a PPPoE Active Discovery Terminate **S46** to PPPoE AC **420** to tear down the PPPoE call and then sends a PPTP Call Disconnect Notify **S37** to notify host **410** of the call disconnection.

After the session is over, the PPTP control connection can be kept alive or stopped at the discretion of either host **410** or modem **400.** If host **410** wishes to stop the PPTP control connection, it sends a PPTP Stop Control Connection Request **S38** to modem **400.** Modem **400** responds by sending a PPTP Stop Control Connection Reply **S39** to host **410,** at which time the PPTP control connection is terminated.

By providing a modem having a processor that implements the PPPoE protocol stack, the present invention eliminates the requirement that PPPoE protocol stack and the PPP protocol stack reside on the same machine.

While the invention has been described by way of example and in terms of the preferred embodiment, it is to be understood that the invention is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements, which is defined by the following claims and their equivalents.

## Claims

1. A modem device (200) located between at least a host (210) and at least a PPPoE access concentrator (220), comprising:
a processor (205) coupled to said host and said PPPoE access concentrator (220) adapted to implement at least the PPPoE protocol that provides PPPoE control and encapsulation functions, and transport signals to said host (210) and said PPPoE access concentrator (220) respectively; and
a local port (201) coupled to said host,
wherein said modem device (200) is **characterised in that** it is adapted to receive from said host (210) a PPTP Start-Control-Connection-Request through said local port (201) and to initiate a PPTP control connection and to respond by sending a PPTP Start-Control-Connection-Reply to said host (210) through said local port (201), at which point in time a PPTP control connection is established.

2. The modem device (200) as claimed in claim 1, further comprising a remote port (202) coupled to said PPPoE access concentrator.

3. The modem device (200) as claimed in claim 2, wherein said processor is adapted to control said local port (201) to make the communication between said host (210) and said modem device (200).

4. The modem device (200) as claimed in claim 3, wherein said processor (205) is adapted to control said remote port (202) to make the communication between said PPPoE access concentrator (220) and said modem device (200).

5. The modem device as claimed in claim 3, wherein said processor (205) is adapted to control the relaying of PPP frames between said local port (201) and said remote port (202).

6. The modem device (200) as claimed in claim 1, further comprising:
a remote port (202) coupled to said PPPoE access concentrator (220);
and
said processor (205) coupled to said remote port (202) and said local port (201) being adapted to implement at least the PPPoE protocol that provides PPPoE control and encapsulation functions, and to transport signals to said host (210) and said PPPoE access concentrator (220) with said local port (201) and said remote port (202) respectively.

7. The modem device (200) as claimed in claim 6, wherein said processor (205) is adapted to control said local port (201) to make the communication between said host (210) and said modem device (200).

8. The modem device (200) as claimed in claim 7, wherein said processor (205) is adapted to control said remote port (202) to make the communication between said PPPoE access concentrator (220) and said modem device (200).

9. The modem device (200) as claimed in claim 8, wherein said processor (205) is adapted to control the relaying of PPP frames between said local port (201) and said remote port (202).

## Patentansprüche

1. Modemvorrichtung (200), welche zwischen wenigstens einem Host (210) und wenigstens einem PPPoE-Zugangskonzentrator (220) angeordnet ist, welche Folgendes enthält:
einen Prozessor (205), der mit dem Host und dem PPPoE-Zugangskonzentrator (220) gekoppelt ist, um wenigstens das PPPoE-Protokoll
zu implementieren, das eine PPPoE-Steuerung und Kapselfunktionen zur Verfügung stellt und Signale jeweils zum Host (210) und zum PPPoE-Zugangskonzentrator (220) zu transportieren, und
mit einem lokalen Port (201), der mit dem Host gekoppelt ist, wobei die Modemvorrichtung (200) **dadurch gekennzeichnet ist, dass** sie geeignet ist, von dem Host (210) eine PPTP-Start/Steuerung/Verbindungsanfrage über den lokalen Port (201) zu empfangen und eine PPTP-Steuerverbindung zu initiieren und durch Aussenden einer PPTP-Start/Steuerung/Verbindungsantwort an den Host (210) durch den lokalen Port (201) zu antworten, wobei zu diesem Zeitpunkt eine PPTP-Steuerverbindung eingerichtet ist.

2. Modemvorrichtung (200) nach Anspruch 1, welche ferner einen entfernten Port (202) aufweist, der mit dem PPPoE-Zugangskonzentrator gekoppelt ist.

3. Modemvorrichtung (200) nach Anspruch 2, bei der der Prozessor geeignet ist, den lokalen Port (201) so zu steuern, dass die Verbindung zwischen dem Host (210) und der Modemvorrichtung (200) hergestellt ist.

4. Modemvorrichtung (200) nach Anspruch 3, bei der der Prozessor (205) geeignet ist, den entfernten Port (202) so zu steuern, dass die Verbindung zwischen dem PPPoE-Zugangskonzentrator (220) und der Modemvorrichtung (200) hergestellt ist.

5. Modemvorrichtung nach Anspruch 3, bei der der Prozessor (205) geeignet ist, PPP-Rahmen zwischen dem lokalen Port (201) und dem entfernten Port (202) weiterzuleiten.

6. Modemvorrichtung (200) nach Anspruch 1, welche ferner enthält:
einen entfernten Port (202), der mit dem PPPoE-Zugangskonzentrator (220) verbunden ist, und der Prozessor (205) mit dem entfernten Port (202) gekoppelt ist und der lokale Port (201) geeignet ist, wenigstens das PPPoE-Protokoll zu implementieren, das eine PPPoE-Steuerung und Kapselfunktionen zur Verfügung stellt, und Signale an den Host (210) und den PPPoE-Zugangskonzentrator (220) mit dem lokalen Port (201) und dem entfernten Port (202) zu übertragen.

7. Modemvorrichtung (220) nach Anspruch 6, bei der der Prozessor (205) geeignet ist, den lokalen Port (201) so zu steuern, dass eine Verbindung zwischen dem Host (210) und der Modemvorrichtung (200) hergestellt ist.

8. Modemvorrichtung (200) nach Anspruch 7, bei der der Prozessor (205) geeignet ist, den entfernten Port (202) so zu steuern, dass die Verbindung zwischen dem PPPoE-Zugangskonzentrator (220) und der Modemvorrichtung (200) hergestellt ist.

9. Modemvorrichtung (200) nach Anspruch 8, bei der der Prozessor (205) geeignet ist, PPP-Rahmen zwischen dem lokalen Port (201) und dem entfernten Port (202) weiterzuleiten.

## Revendications

1. Un dispositif de modem (200) situé entre au moins un ordinateur hôte (210) et au moins un multiplexeur d'accès PPPoE (220) comprenant :
un processeur (205) couplé audit ordinateur hôte et audit multiplexeur d'accès PPPoE (220) adapté pour au moins mettre en oeuvre le protocole PPPoE qui fournit des fonctions de contrôle et d'encapsulation PPPoE et pour acheminer des signaux audit ordinateur hôte (210) et au dit multiplexeur d'accès PPPoE (220) respectivement ; et
un port local (201) couplé au dit ordinateur hôte,
dans lequel le dispositif de modem (200) est **caractérisé en ce qu'**il est adapté pour recevoir du dit ordinateur hôte (210) une demande Start-Control-Connection-Request PPTP par l'intermédiaire du port local (201) et pour initier une connexion de contrôle PPTP et pour répondre en envoyant une réponse Start-Control-Connection-Reply PPTP au dit ordinateur hôte (210) par l'intermédiaire du port local (201), ce qui permet d'établir à ce moment-là une connexion de contrôle PPTP.

2. Le dispositif de modem (200) selon la revendication 1, comprenant de plus un port distant (202) couplé au multiplexeur d'accès PPPoE.

3. Le dispositif de modem (200) selon la revendication 2, dans lequel le dit processeur est adapté pour contrôler le dit port local (201) de sorte à établir une communication entre le dit ordinateur hôte (210) et ledit dispositif de modem (200)

4. Le dispositif de modem (200) selon la revendication 3, dans lequel ledit processeur est adapté pour contrôler ledit port distant (202) de sorte à établir une communication entre ledit multiplexeur d'accès PPPoE (220) et ledit dispositif de modem (200).

5. Le dispositif de modem selon la revendication 3, dans lequel ledit processeur (205) est adapté pour contrôler le relais des trames PPP entre ledit port local (201) et ledit port distant (202).

6. Le dispositif de modem (200) selon la revendication 1, comprenant de plus
un port distant (202) couplé audit multiplexeur d'accès PPPoE (220)
et
ledit processeur (205) couplé au dit port distant (202) et audit port local (201), étant adapté pour mettre en oeuvre au moins le protocole PPPoE qui fournit des fonctions de contrôle et d'encapsulation PPPoE et pour acheminer des signaux audit ordinateur hôte (210) et audit multiplexeur d'accès PPPOE (220) grâce audit port local (201) et audit port distant (202) respectivement.

7. Le dispositif de modem (200) selon la revendication 6, dans lequel ledit processeur (205) est adapté pour contrôler ledit port local (201) de sorte à établir une communication entre ledit ordinateur hôte (210) et ledit dispositif de modem (200).

8. Le dispositif de modem (200) selon la revendication 7, dans lequel ledit processeur (205) est adapté pour contrôler ledit port distant (202) de sorte à établir une communication entre ledit multiplexeur d'accès PPPoE (220) et ledit dispositif de modem (200).

9. Le dispositif de modem (200) selon la revendication 8, dans lequel ledit processeur (205) est adapté pour contrôler le relais de trames PPP entre ledit port local (201) et ledit port distant (202).
